# EUROPÄISCHE PATENTSCHRIFT

(11) **EP 0 478 646 B1**
(45) Veröffentlichungstag und Bekanntmachung des Hinweises auf die Patenterteilung: **23.11.1994**
(21) Anmeldenummer: 90909680.2
(22) Anmeldetag: 15.06.1990
(51) Int. Cl.: B05B 15/12

(54) **KABINE ZUM SPRÜHBESCHICHTEN VON GEGENSTÄNDEN MIT PULVERFÖRMIGEM BESCHICHTUNGSMATERIAL**
CABIN FOR SPRAY COATING OBJECTS WITH POWDERED COATING MATERIAL
CABINE DE REVETEMENT D'OBJETS PAR PULVERISATION D'ENDUITS PULVERULENTS

(30) Priorität: 16.06.1989 DE 8907537 U
(43) Veröffentlichungstag der Anmeldung: 08.04.1992
(73) Patentinhaber: FARB-TEC GESELLSCHAFT FUR BESCHICHTUNGSKABINEN SYSTEME MBH, D-22359 Hamburg (DE)
(72) Erfinder: PINGEL, Joachim, D-2000 Hamburg 67 (DE)
(74) Vertreter: Patentanwälte Wenzel & Kalkoff
(86) Internationale Anmeldenummer: EP9000940
(87) Internationale Veröffentlichungsnummer: WO9015669

(56) Entgegenhaltungen:
- CH-A- 617 871
- DE-A- 2 262 084
- DE-A- 2 731 123
- DE-A- 3 318 043
- DE-A- 3 500 005
- FR-A- 2 009 625

## Beschreibung

Die Erfindung betrifft eine Kabine zum Sprühbeschichten von Gegenständen mit pulverförmigem Beschichtungsmaterial, mit einer mindestens ein Flächenfilter umfassenden Filteranordnung für die pulverbeladene, gefiltert aus der Kabine in die Umgebung zu leitende Luft und mit einer mindestens eine die Filterfläche beaufschlagende, funktionell gegen diese gerichtete Druckluftdüse umfassenden Reinigungsvorrichtung für das Flächenfilter, wobei zwischen Reinigungsvorrichtung und Flächenfilter eine Relativbewegung stattfindet.

Gegenüber ursprünglich üblichen Filterreinigungskonstruktionen, die mit mechanischen Mitteln (Rütteln) oder Druckimpulsen (bei feststehendem Filter und feststehender Düse) arbeiteten, hinsichtlich des Reinigungsgrades aber nicht befriedigen konnten, zumal die mechanische Beanspruchung vor allem von empfindlichen Filtern zu hoch war, sind Filteranordnungen obiger Art entwickelt worden, bei denen entweder die Reinigungseinrichtung, normalerweise in Form einer Düse bewegt wird und das Filter feststeht (DE-OS 35 00 005), oder bei denen eine Bewegung des Filters bei feststehender Düse erfolgt. Hauptzweck der herkömmlichen Filterreinigungsvorrichtungen ist es, während des Betriebes das Filter so zu reinigen, daß es funktionsfähig bleibt, es also zu regenerieren. Bei Farbwechsel, insbesondere bei größeren Unterschieden in den Farbtönen, müssen die Filter vollständig ausgewechselt werden.

Bezüglich der Düsen gibt es im allgemeinen zwei Systeme, nämlich eines, bei dem von der Reinluftseite her, also von der dem Kabineninnenraum abgelegenen Rückseite des Filters, Druckluft durch das Filter geblasen wird (DE-OS 33 18 043), sowie ein anderes, bei dem vom Kabineninnenraum, d.h. der "Staub"-Seite her, mit Saugluft gearbeitet wird (DE-PS 30 23 044).

Flächenfilter haben gegenüber Patronenfiltern, die aufgrund ihrer größeren Filterfläche in bezug auf die Baugröße an sich einen höheren Abscheidegrad ermöglichen, den Vorteil, daß sie relativ preiswert herstellbar sind und einen sehr schnellen Filteraustausch bei Farbwechsel ermöglichen (z.B. Klettbandverschlüsse bei Nadelfilzfiltern), wodurch sich besonders Vorteile dann ergeben, wenn mittlere oder kleinere Losgrößen von Teilen zu beschichten sind. Aus Gründen der Wirksamkeit und vor allem auch der Kosten sind für verschiedene Einsatzzwecke unterschiedliche Flächenfilterstrukturen bekannt geworden, nämlich u.a. Papier-, Gewebe-, Mineral-, Metall- und auch Kunststoffilter.

Ein wesentliches Problem bei Papier- und empfindlichen Gewebefiltern besteht darin, daß zwischen einer Abreinigungsdüse und der Filterfläche keine mechanische Berührung stattfinden darf, weil anderenfalls Zerstörungen eintreten würden. Deshalb müssen sich bei solchen Filtern die Düsen im Abstand zur Filterfläche bewegen. Eine hundertprozentige Reinigung der Filterfläche, wie sie ein Farbwechsel erfordert, ist damit beim Überfahren nicht erreichbar. Dazu ist in der Regel die mechanische Stützkonstruktion für das Filter der Düsenabreinigung hinderlich. Deshalb müssen solche Filter bei einem notwendigen Farbwechsel der Kabine, der, wie angedeutet, relativ häufig notwendig werden kann, mit ausgetauscht werden. Hingegen ist bei normalen Gewebefiltern eine Berührung zwischen Düsen- und Filterfläche möglich, was zwar zu höheren Wirkungsgraden, aber auch zu leichteren Verschmutzungen des Filters infolge mechanischen Zusetzens/Verschmierens führt. Außerdem führt der mechanische Abrieb zur Bildung von Flusen, die aus dem abgereinigten Pulvermaterial, das nach Möglichkeit wiederverwendet werden soll, durch einen zusätzlichen Arbeitsgang entfernt werden müssen.

Um die Nachteile dieser bekannten Papier- und Gewebefilter, speziell die Notwendigkeit eines Filteraustauschs bei jedem Farbwechsel zu umgehen, werden in zunehmendem Maße Kunststoffilter eingesetzt. Diese sind jedoch in Verbindung mit den beschriebenen Düsensystemen nur über eine begrenzte Zeit verwendbar, weil einerseits eine im Abstand zur Filterfläche geführte Düse nicht für die erforderliche, genügende Reinigung sorgt, während eine auf der Filteroberfläche gleitende Düse mit der Zeit zum Verschmieren und insbesondere Verschleißen der Kunststoffoberfläche führt. Diese Schwierigkeiten treten in verstärktem Maße dann auf, wenn Kunststoffilter - aus statischen Gründen - zur Erhöhung ihrer Festigkeit mit einer kabinenseitig geriffelten Oberfläche ausgebildet sind.

Solche Kunststoffilter werden allgemein als Filterpakete montiert und mit Druckimpulsen abgereinigt. Dadurch erfolgt eine Beaufschlagung benachbarter Filterteile mit abgereinigtem Pulvermaterial, so daß keine gezielte Reinigung, wie sie für Farbwechsel erforderlich wäre, möglich ist.

Der Erfindung liegt deshalb die Aufgabe zugrunde, zur Erhöhung der Wirtschaftlichkeit einer Kabine der eingangs beschriebenen Art ein Flächenfilter-Reinigungssystem vorzuschlagen, das universell für verschiedene Arten von Flächenfiltern einsetzbar ist und für einen ausreichend hohen Reinigungsgrad mit dem Ziel der Vermeidung von Filteraustausch bei Farbwechsel sorgt.

Diese Aufgabe wird erfindungsgemäß dadurch gelöst, daß
- das Flächenfilter in eine Mehrzahl von gegeneinander abgedichteten zellenartigen Abschnitten aufgeteilt ist,
- die Druckluftdüse(n) als jeweils mindestens einen Abschnitt beaufschlagend dem Feld der Abschnitte zugeordnet ist (sind),
- die Druckluftdüsen-Reinigungsvorrichtung ausschließlich im Reingasbereich hinter dem Flächenfilter angeordnet ist, und
- die Druckluftdüse eine mit ihr unmittelbar bewegbare dichtende Abdeckeinrichtung zum Abdichten des jeweils von der Düse beaufschlagten Abschnitts sowie der diesem direkt benachbarten einen oder mehreren Abschnitte umfaßt.

Besonders bevorzugt sind dabei die Abschnitte nach einem vorgegebenen Schema angeordnet.

Durch die erfindungsgemäße Lösung ist es möglich, Filter in im wesentlichen flächiger Anordnung unabhängig von der Beschaffenheit ihrer Oberfläche zu reinigen, d.h. unabhängig davon, ob diese hinsichtlich ihres Materials besonders empfindlich ist, ob sie eben oder gewellt ist, ob sie zur Vergrößerung der effektiven Filterfläche eine wellen-, sägezahnähnliche oder sonstwie alternierende Ausbildung hat etc. So ermöglicht nämlich die rückseitige Anordnung des Abreinigungssystems in zellenartiger Ausbildung einen Ausgleich hinsichtlich Ungleichmäßigkeiten oder sonstiger geometrischer Abweichungen von der Ebene - seien diese aus konstruktiven oder Materialgründen gegeben - in bezug auf eine Bewegung des Abreinigungssystems relativ zur Filteroberfläche, indem der Raum hinter dem Filter in eine größere Saugzellenzahl aufgeteilt ist, so daß hier eine "statische Ebene" für die Bewegung des Abreinigungssystems erreicht wird. Je nach Aufgabenstellung bzw. gewünschtem Reinigungseffekt können gezielt relativ kleine Teile der Filteroberfläche mit Druck beaufschlagt werden, wobei zusätzlich durch die Aufteilung mit Hilfe von rahmenförmigen Wänden, die die einzelnen Zellen jeweils umgeben können, eine mechanische Abstützung der Filterfläche erreichbar ist. Besonders vorteilhaft ist, daß die Abreinigung des Filters kontinuierlich während des Bechichtungsvorganges vorgenommen werden kann, so daß für das Filter ständig ein Optimum an Effektivität erzielbar ist. Durch die bevorzugte Anordnung der Abschnitte nach einem vorgegebenen Schema ergibt sich die Möglichkeit einer Programmsteuerung ergibt und die Reinigungsdüse kann während des Beschichtungsvorganges kontinuierlich stufenweise von einer zur nächsten der mit Druckluft zu beaufschlagenden Zellen bewegt werden. Bei kontinuierlichem Lauf bestimmen Größe und Anordnung der Öffnungen für die Düse(n), die zugleich die Absaugöffnungen für das Filter bilden, die Dauer/Länge des Reinigungsimpulses der Düsen.

Weiterhin wird in konstruktiv besonders sinnvoller Weise sichergestellt, daß die Reinigungsvorrichtung für das Flächenfilter stets automatisch nur einen der zellenartigen Abschnitte abdeckt und die Kabine insgesamt während der Reinigungszeit dieses Abschnittes weiterarbeiten kann.

Zusätzlich wird verhindert, daß durch die Reinigung eines Zellenabschnittes benachbarte Abschnitte irgendwie in ihrer Funktion beeinträchtigt werden, beispielsweise dadurch, daß durch die Druckdüse abgeblasenes Pulver insbesondere bei vertikaler Zellenausrichtung von einem gerade gereinigten benachbarten Abschnitt, der schon wieder seine normale Arbeitsfunktion erfüllt, angesaugt wird.

In besonders bevorzugter Ausbildung der Erfindung sollen die zellenartigen Abschnitte mit den Rändern ihrer Öffnungen für die Druckluftdüse, also insbesondere für die mit dieser bewegte Abdeckeinrichtung, eine ebene Fläche aufspannen, so daß die Düse in dem vorgenannten, vorzugsweise automatisch gesteuerten Bewegungsablauf die Rückseite des Filters unabhängig davon bestreichen kann, ob nun die Filterfläche total eben ist oder mit irgendwelchen Wellungen, Wölbungen, einem alternierenden Profil oder ähnlichen, der Vergrößerung und/oder sonstwie der Funktionsverbesserung des Filters dienenden, von der Ebene abweichenden Gestaltungen ausgebildet ist. Mit anderen Worten kann die Tiefe der einzelnen Zellen untereinander variieren, und es wird durch die Anordnung der Öffnungsebene ein Ausgleich hinsichtlich etwaiger Unebenheiten der Filteroberfläche in Bezug auf die Bewegung der Reinigungsdüse geschaffen.

Bei in der Regel in Beschichtungskabinen vertikal angeordneten Flächenfiltern ist es besonders günstig, wenn die zellenartigen Abschnitte in vertikalen oder horizontalen Reihen oder Zeilen angeordnet sind, wobei je nach Höhe des Flächenfilters und den gegebenen Druckverhältnissen mit einer Düse die Gesamthöhe des Filters druckbeaufschlagt werden kann oder zumindest eine Unterteilung in mehrere Teile erfolgt, die dann nacheinander in vertikaler Richtung von der Düse überfahren werden, bis diese anschließend zur benachbarten vertikalen Reihung weiterfährt.

Die Erfindung ist aber nicht nur im Zusammenhang mit vertikalen Flächenfiltern realisierbar, sondern auch mit solchen in beliebiger anderer Lage, beispielsweise mit horizontal angeordneten festen Boden-Flächenfiltern. Dabei ergibt sich ein besonderer Vorteil dann, wenn die Kabine ein Bodenfilter aufweist, das mindestens teilweise gegenüber der Horizontalen geneigt ausgebildet sein kann. Damit kann abgereinigtes Pulver unter Ausnutzung der Schwerkraft zu einer jeweils tiefer liegenden Stelle transportiert werden, an der eine Rinne oder ein Kanal das Pulver aufnehmen kann, um es aus der Kabine herauszuleiten. Beispielsweise kann dabei das Bodenfilter mit von einer Mittelachse dachförmig nach außen geneigten Filtersektionen ausgebildet sein, auf denen überschüssiges Pulver bei der Abreinigung leicht unter Wirkung der Schwerkraft nach außen gleiten und im Randbereich konzentriert aufgenommen und abgeführt werden kann. Besonders zweckmäßig ist es dabei, wenn die Kabine mit einer Zweitabsaugkanalanordnung ausgerüstet ist, die nach einer speziellen, bevorzugten Ausführungsform je eine Zweitabsaugrinne im Übergangsbereich zwischen Kabinenboden und den beiden vertikalen Kabinenwänden umfaßt. Hierbei kann von dem dachförmig geneigten Bodenfilter nach außen abgeblasenes bzw. abtransportiertes Pulvermaterial zusammen mit von den vertikalen Filtern herabfallendem Pulver unmittelbar und unabhängig von dem übrigen Absaugsystem der Kabine in einem seitlichen, funktionell wenig störenden Sammelbereich konzentriert gesammelt werden. Andererseits ist es aber auch möglich, ohne ein solches Zweitabsaugungssystem in dem wenigstens teilweise geneigten Bodenfilter mindestens eine Pulversammelrinne auszubilden, die, je nach Bautyp der Kabine oder sonstigen Zweckmäßigkeiten hinsichtlich der Pulverabförderung, in den Randbereichen zu den Seitenwänden oder auch im Mittenbereich des Bodenfilters angeordnet sein können. In jedem Fall wird dann das Bodenfilter mit entsprechenden, zu solchen Rinnen hin geneigten Bereichen ausgeformt sein, während der Abtransport in der (den) Rinne(n) mittels eines in Förderrichtung geneigten Rinnen-Fluidbodens oder auch mittels mechanischer Transportelemente erfolgen kann. Mit anderen Worten ist es damit möglich, von den Filtern abfallendes bzw. durch gesonderte, zu diesem Zweck geeignete Vorrichtungen abgereinigtes Pulvermaterial direkt weg- und einer Auffangvorrichtung, z.B. in Form eines externen Pulverbehälters, ohne die Gefahr von Pulveranhäufungen/-ablagerungen im Kabineninnenraum zuzuführen. Ein weiterer, erheblicher Vorteil eines solchen Zweitabsaug- oder Rinnenfördersystems besteht darin, daß man nur einen zentralen Pulverbehälter für alle Filtereinheiten benötigt. So kommt man auch bei Reihenanordnung mehrerer Kabineneinheiten mit einem einzigen Pulverbehälter aus.

Nach einer anderen Weiterbildung der Erfindung können das/die Vertikal-Flächenfilter als U-förmig angeordnete Filter mit einer im wesentlichen ebenen Hauptfläche und zwei sich von deren Rändern winklig in den Kabinenraum erstreckenden Nebenflächen ausgebildet sein, obwohl hier auch andere geometrische Formen für die Anordnung der Filterebenen in Betracht kommen, z.B. eine V-Form oder gekrümmte Anordnungen. Aus diesen Beispielen wird ein maßgeblicher Vorteil des erfindungsgemäßen Reinigungssystems deutlich; so wird es nämlich möglich, im Winkel zueinander angeordnete, d.h. sich nicht in einer gemeinsamen Ebene erstreckende Filterflächen mittels der rückseitigen Zellen hinsichtlich der Bewegungsebene des Reinigungswerkzeuges funktionell plan zu gestalten, so daß das Reinigungswerkzeug nur eine geradlinige und nicht irgendeine beliebige Kurven- oder sonstige Bewegung auszuführen braucht, während gleichzeitig aber die Größe der Filterfläche insgesamt erheblich erhöht werden kann. Zweckmäßig wird man bei solchen U-förmig ausgebildeten Filtern, z.B. auf eine Symmetrieebene bezogen, zwei Düsen, und zwar je eine auf jeder Seite, anordnen, für die man einen gemeinsamen Antrieb vorsehen kann. Gleichzeitig wird es möglich, unter dem U-Filter einen Pulverbehälter anzubringen, in den das abgeblasene Pulver direkt herabfallen kann.

Wie bereits angedeutet, ist es durch das rückseitige Düsen-Reinigungssystem möglich, die wirksame Filterfläche durch verschiedene Maßnahmen in der geometrischen Gestaltung wesentlich zu vergrößern, ohne daß Reinigungsprobleme entstehen können. So kann das Flächenfilter mit einer wellen-, alternierend U- oder V-förmig oder ähnlich gestalteten Oberfläche ausgebildet sein; hier kommen natürlich auch andere, nicht im einzelnen aufzuzählende geometrische Flächenformen in Betracht, die dazu beitragen, die Filterfläche wirksam zu vergrößern.

Während, wie beschrieben, die Abreinigung der Flächenfilter mit der erfindunggemäßen rückseitigen Düsenanordnung während des Betriebs der Kabine kontinuierlich erfolgen kann, ist es natürlich auch möglich, mit diesem System während der Reinigung der Kabinenwände bei Farbwechsel etc. zu arbeiten. Dabei kann die Kabine zusätzlich zu dem erfindungsgemäßen System mit einer durch den Kabineninnenraum bewegbaren Abreinigungsvorrichtung mit mechanischen Reinigungs-, insbesondere Schabeelementen, Schabelippen, Bürsten od.dgl. zum mechanischen Abstreifen von an den Kabinenwänden haftendem Pulver ausgerüstet sein. Diese Elemente weisen zweckmäßig eine gewisse Elastizität auf und bewirken, daß an der Kabinenwand wie dem Filter haftendes Pulver mechanisch abgestreift wird verliert und dann über eine Absaugung im Luftstrom aus der Kabine transportiert werden kann, so daß es nicht mehr nötig ist, die Kabine mit Hilfe aller möglichen manuellen Hilfsvorrichtungen zu reinigen. Sehr zweckmäßig ist es, eine solche Abreinigungsvorrichtung mit einer in ihr integrierten Absaugung auszurüsten. Wenn man, speziell in einer solchen Anordnung, Abreinigungsvorrichtung und Druckluftdüse miteinander synchron über die abzureinigenden Filterflächen bewegbar anordnet, kann man das abgereinigte Pulver konzentriert in einen gemeinsamen Pulverbehälter einleiten, d.h. rückgewinnen, ggf. auf dem Weg über ein zusätzliches Zweitabsaugkanalsystem.

Insgesamt sieht die Erfindung ein Reinigungssystem vor, mit dem eine kontinuierliche und gründliche Reinigung der Filter im Betrieb und/oder bei Farbwechsel möglich ist, wobei die Filter schnell und leicht austauschbar gegenüber dem Zellensystem angeordnet sein sollen. Natürlich richtet sich der Einsatz des erfindungsgemäßen Abreinigungssystems für Regeneration der Filter und Vollreinigung im Sinne der Vermeidung des Filteraustausches bei Farbwechsel auch nach dem verwendeten Filtermaterial und Gesichtspunkten der Wirtschaftlichkeit. So kann bei geringer Anzahl von Farbtönen der Filterwechsel wirtschaftlicher sein und z.B. ein Nadelfilzfilter zum Einsatz kommen, das allein mit Druckluft bei stark unterschiedlichen Farbtönen nicht vollständig genug zu reinigen wäre.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt
- Fig. 1: eine Draufsicht auf eine für diskontinuierlichen Betrieb bestimmte Pulverbeschichtungskabine unter Weglassung der Kabinendecke mit erfindungsgemäßer Druckluftdüsenanordhung für ein U-förmiges Flächenfilter mit horizontal verlaufenden Beaufschlagungsabschnitten für die Düse,
- Fig. 2: einen Querschnitt gemäß II-II der Fig. 1 durch die Kabine,
- Fig. 3: einen Schnitt III-III der Fig. 1,
- Fig. 4: einen Schnitt IV-IV der Fig. 3 in vergrößertem Maßstab als Detail der Druckluftdüsenanordnung mit ebenem Filter,
- Fig. 5: einen Querschnitt ähnlich der Fig. 4, jedoch für eine Variante der Düsenausbildung und ein Flächenfilter mit alternierend V-förmig ausgebildeter, vergrößerter Filterfläche,
- Fig. 6: eine abgewandelte Ausführungsform der Erfindung für eine Durchlaufkabine (mit kontinuierlichem Betrieb), die ein ebenes Flächenfilter mit vertikalen Beaufschlagungsabschnitten und ein Bodenfilter sowie eine Zweitkanalabsaugung aufweist,
- Fig. 7: einen Detailschnitt gemäß VII-VII der Fig. 6 in vergrößertem Maßstab und zusätzlich in Verbindung mit einer durch den Kabineninnenraum bewegbaren (in Fig. 6 nicht dargestellten) Kabinen-Reinigungsvorrichtung,
- Fig. 8: eine geschnittene Seitenansicht einer Kabine mit einer weiteren Variante der Zellenanordnung und
- Fig. 9: eine Variante der in Fig. 6 dargestellten Ausführungsform mit zentraler Pulverrinne.

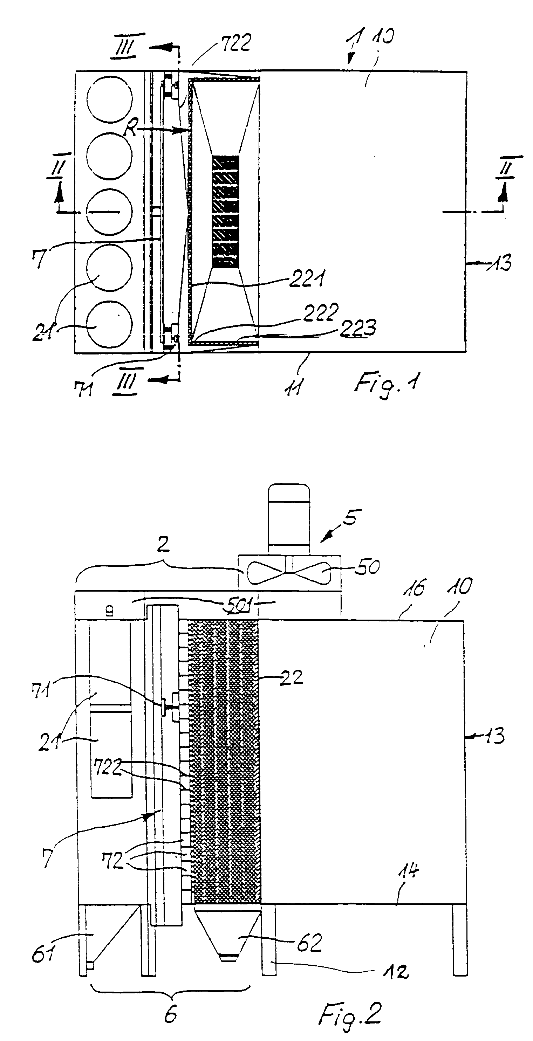

Eine in Fig. 1 bis 3 gezeigte Kabine 1 für die Pulverbeschichtung bestimmt einen Kabineninnenraum 10, der von einer Wandung 11 mit Kabinendecke 16, jeweils aus stabilem Wandungsmaterial, u.a. Kunststoff, Blech vorzugsweise Edelstahlblech, od.dgl. dichtend umschlossen ist. Die Kabine 1, die hier als Hand-Beschichtungskabine, d.h. als Kabine mit diskontinuierlicher Werkstückbewegung ausgebildet ist, ruht auf einem unterhalb eines Kabinenbodens 14 vorgesehenen stabilen Traggestell 12 und weist eine vorderseitige Öffnung 13 auf, von der aus in den Kabineninnenraum eingebrachte Gegenstände mit herkömmlichen Spritzpistolen, die hier der Übersichtlichkeit halber ebenso wenig wie die zu beschichtenden Gegenstände selbst dargestellt sind, beschichtet werden. An der Rückseite der Kabine 1 befindet sich ein Filter-Gehäuseabschnitt mit einer Anordnung von Filtern 2, die hier als Flächenfilter 22 mit einer mehrere Patronenfilter 21 umfassenden Nachfiltereinrichtung vorgesehen sind. Um überschüssiges, d.h. sich nicht auf der Oberfläche des zu beschichtenden Werkstückes ablagerndes Beschichtungsmaterial an das Flächenfilter 22 heranzuführen, ist die Filteranordnung 2 mit einer Absaugung 5 verbunden, die ein Absauggebläse 50 mit einem den Patronenfiltern 21 zugeordneten Kanalsystem 501 umfaßt. Die abgesaugte, in bzw. an den Filtern 22 und 21 von überschüssigem Pulver gereinigte Luft kann an die Umluft abgegeben werden. Für an den Filtern abgeschiedenes Pulver ist eine Pulveraufnahme 6 vorgesehen, die hier einen der Rückgewinnung von an den Flächenfilter 22 anfallendem Pulver durch Rückführung zur Pulvereinspeisung dienenden Pulverauffangbehälter 62 mit nicht näher dargestellter Siebmaschine und Injektor zur Förderung des Pulvers zur Spritzpistole sowie einer Pulversammelwanne 61 unterhalb der Nachreinigungspatronenfilter 21 umfassen. Diese Auffangwanne 61 kann bildet einen Abfallbehälter.

Maßgeblicher Gedanke der Erfindung ist die Ausbildung einer auf der durch den Pfeil R angedeuteten Rückseite des Flächenfilters 22 angeordneten Reinigungsvorrichtung 7, die in wesentlichen ein Druckdüsensystem, hier zwei Druckdüsen 71 umfassend, zusammen mit einer nach einem gleichmäßigen Schema aufgebauten Zellenanordnung von Beaufschlagungsabschnitten 72 umfaßt. Die einzelnen, für sich nach außen geschlossenen Abschnitte 72, die bei diesem Ausführungsbeispiel horizontal angeordnet sind, weisen Öffnungen 721 für die Düsen 71 auf und sind gegeneinander durch Abschnittwände 722 abgedichtet. Außerhalb der Öffnungen 721 sind diese Abschnitte ebenfalls mit einer dichten Wandung versehen. Die beiden Druckdüsen 71 sind gemeinsam in der Höhe verfahrbar, so daß sie stufenweise nacheinander einzelne Abschnitte 72 mit Druck beaufschlagen und somit das Flächenfilter 22 entgegen der üblichen Filterrichtung in den Kabinenraum hinein abreinigen können. Die nicht von den Düsen 71 beaufschlagten Abschnitte 72 arbeiten normal, d.h. sie stehen unter dem vom Absauggebläse 50 erzeugten Unterdruck. Durch diesen wird die Luft durch das Filter 22 zur Nachreinigung zu den Patronenfiltern 21 gesaugt, von denen Restpulver zur Pulveraufnahme 6 und die reine Abluft in die Umgebung gelangt.

Wie insbesondere aus Fig. 1 in Verbindung mit Fig. 2 erkennbar, ist das Flächenfilter U-förmig ausgebildet, wobei sich von einer Hauptfläche 221 bzw. deren Rändern 222 Nebenflächen 223 in den Kabinenraum 10 erstrecken. Durch diese Nebenflächen 223 wird die wirksame Fläche des Filters 22 maßgeblich vergrößert. Um hinsichtlich der durch die Düsen 71 auf die Rückseite des Filters 22 abgeblasenen Druckluft über die gesamte Rückseite des Filters möglichst gleichmäßige Strömungs- und damit Druckverhältnisse zu erzeugen, sind die Zellen mit einem strömungsgünstigen Querschnitt ausgebildet, der sich, wie dargestellt, mit zunehmender Entfernung von der Düse verjüngt, so daß eine gleichmäßige Strömungsgeschwindigkeit am Filter eintritt.

Wie man aus diesem Beispiel erkennt, ist mit dem erfindungsgemäßen Reinigungswerkzeug also nicht nur eine kontinuierlich gleichmäßige Abreinigung eines Flächenfilters während des Pulverbeschichtungsvorganges möglich und somit eine Erhöhung des Filter-Wirkungsgrades erzielbar, sondern zugleich erreicht man eine Vergrößerung der Filterfläche bei konstruktiv einfacher Abreinigungsmöglichkeit für abgewinkelte Filtervergrößerungsflächen. Mit anderen Worten sind, soweit die Bewegung der Reinigungsdüsen 71 betroffen ist, die abgewinkelten Filterteile durch die gezeigte Kammerausbildung in Bezug auf die Abreinigungsfunktion als "plan" ausgestaltet, und das Reinigungswerkzeug braucht keine kurvenförmige oder sonstwie geartete Winkelbewegung zu vollziehen, sondern kann absolut geradlinig bewegt werden.

Ein weiterer Vorteil einer solchen Ausführungsform besteht darin, daß der Pulverbehälter 62 unmittelbar unterhalb des Flächenfilters 22 angeordnet sein kann, so daß das Pulver, das beim Reinigen in den Kabinenraum 10 zurückgedrückt wird, direkt in den Pulverbehälter 62 fallen kann. Dieser ist, wie gezeigt, entsprechend konisch ausgestaltet, so daß eine Sammlung an seinem tiefsten Punkt mit entsprechender Abzugsmöglichkeit und direkter Zuführung zur Spritzpistole in konstruktiv einfacher Weise zu verwirklichen ist.

Fig. 4 zeigt im Detail die Funktion der Druckdüse 71, die mit Abdeckung 73 um ihre Düsenöffnung herum ausgebildet ist und über die Rückseite der Abschnitte 72 bewegt wird. Die Abschnitte 72 sind mit Öffnungen 721 versehen und gegeneinander mittels der Abschnittwände 722 abgedichtet, so daß sie im wesentlichen geschlossene, gegen die Düse offene Zellen bilden, deren Vorderseite von dem Flächenfilter 22 abgedeckt ist. Mit Hilfe der die Düsenöffnung umgebenden Abdeckung 73 ist jeweils mindestens einer der Abschnitte 72 bei Beaufschlagung durch die Druckdüse 71 voll abgedichtet, so daß hier der von dem Absauggebläse 50 erzeugte Unterdruck nicht wirksam wird, sondern Luft gegen das Filter 22 geblasen und letzteres von an bzw. in ihm haftenden Pulver in den Kabinenraum hinein gereinigt wird.

Die notwendige feste Anlage der Druckdüsen 71 gegen die von den Abschnittswänden 721 mit den Öffnungen aufgespannte Fläche erfolgt über Federn 711.

Die Wände 722 bilden, wie erkennbar, ein stabiles Rahmensystem oder -werk und tragen so maßgeblich zur Stützung des Filters bei.

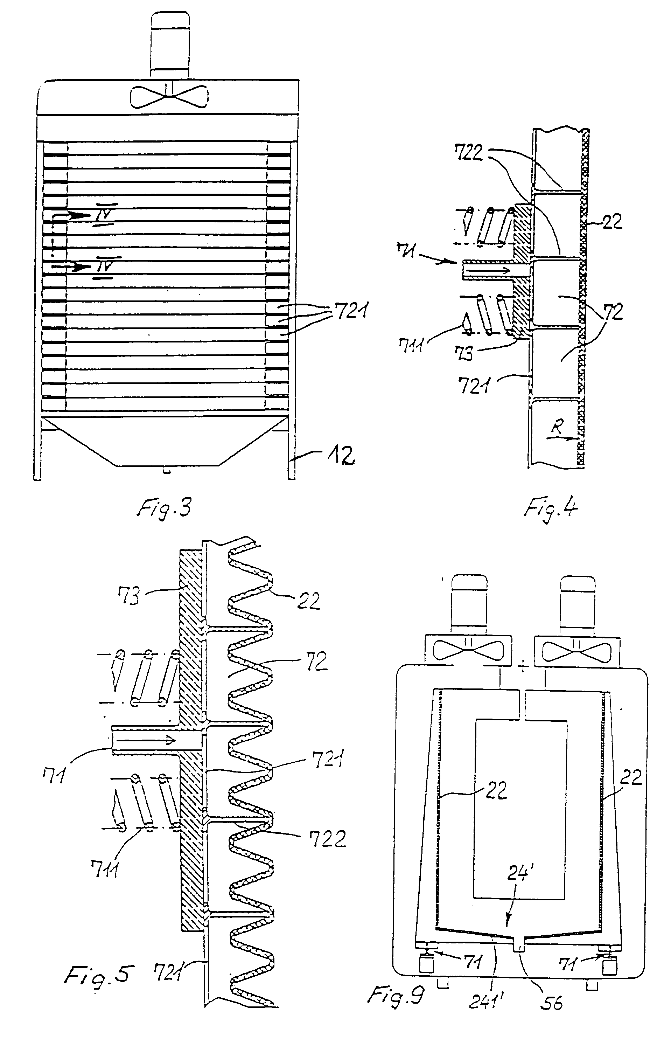

Aus Fig. 5 erkennt man eine in zweifacher Weise gegenüber Fig. 4 abgewandelte Ausführungsform des Düsensystems, und zwar 72 mit einer für niedrige Abreinigungsdrücke geeigneten Düse 71, die von einer wesentlich großflächigeren Abdeckung 73 umgeben ist derart, daß mindestens je ein auf beiden Seiten des gerade zu beaufschlagenden Abschnitts gelegener Abschnitt bzw. dessen Öffnung 721 mit abgedeckt wird. Auf diese Weise werden also die beiden (oder weitere, je nach Größe der Abdeckung 73), dem gerade abzureinigenden Abschnitt benachbarten Abschnitte der Wirkung des Absauggebläses entzogen und sind in bezug auf dieses praktisch drucklos. Auf diese Weise wird sichergestellt, daß nicht in den Kabinenraum unter relativ niedrigem Druck abgereinigtes Pulver sofort im benachbarten Abschnitt wieder angesaugt werden und damit den gerade erfolgten Reinigungsvorgang zumindest teilweise zunichte machen könnte. Während bei horizontaler Anordnung der Abschnitte 72 dieses Problem nicht von ausschlaggebender Bedeutung ist, da man die Druckdüsen 71 von oben nach unten verfahren und somit das Pulver unter Wirkung der Schwerkraft ohnehin nach unten abfallen wird, wobei es dann allenfalls in den Bereich der nächsten, abzureinigenden Abschnitte gelangt, ist die in Fig. 5 gezeigte Anordnung einer breiten, benachbarte Abschnitte überdeckenden Abdeckung für vertikal angeordnete Zellenabschnitte sehr bedeutungsvoll.

Weiterhin zeigt Fig. 5, daß man mit dem erfindungsgemäßen Reinigungswerkzeug die Möglichkeit schafft, die Filteroberfläche durch alternierende V-, U-, Sinuswellen- oder ähnliche Anordnungen maßgeblich zu vergrößern, ohne die Abreinigungsmöglichkeiten zu verschlechtern. Vielmehr findet eine gleichmäßige Abreinigung eines solchen, in seiner Effektivität maßgeblich verbesserten Filters statt, das zudem durch das rückseitige Rahmenwerk der Wände 722, wie bereits angedeutet, wesentlich gestützt wird, so daß praktisch alle irdendwie für den jeweiligen Zweck geeigneten Filtermaterialien unabhängig von ihrer Eigensteifigkeit eingesetzt werden können.

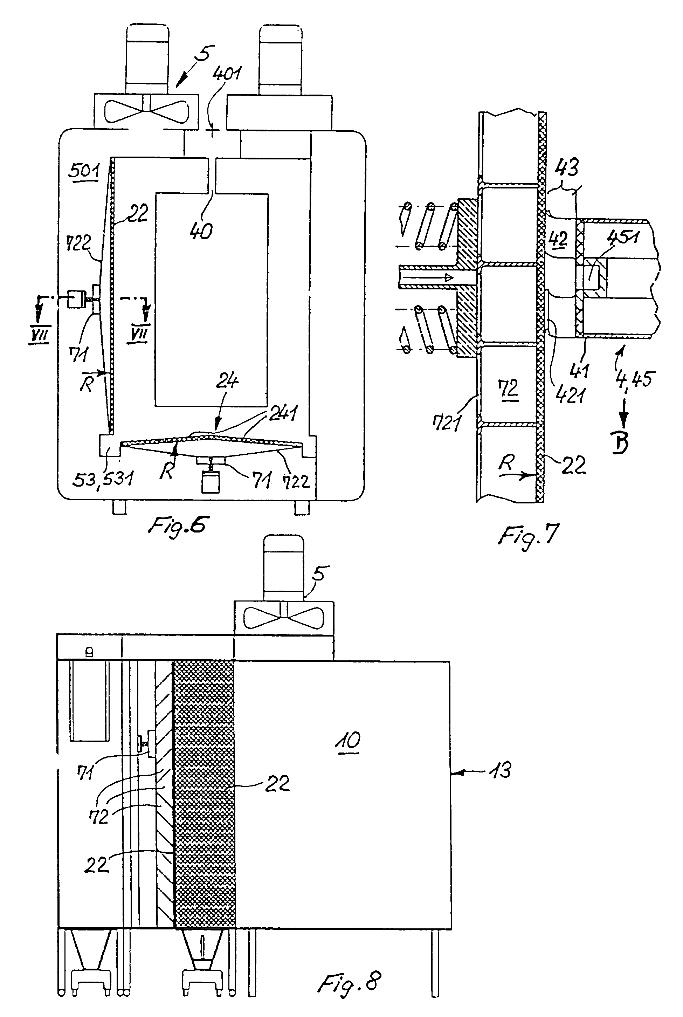

Fig. 6 zeigt eine Ausbildungsvariante einer Durchlaufkabine mit einem seitlichen Flächenfilter 22 sowie einem Bodenfilter 24, das dachförmig mit geneigten Filtersektionen 241 ausgebildet ist. Beiden Filtern 22 und 24 ist je eine Druckdüse 71 mit entsprechender Absaugabschnitt-Anordnung 72 zugeordnet, wobei diese Abschnitte 72 im Bereich des Flächenfilters 22 vertikal angeordnet sind und im Bereich des Bodenfilters senkrecht zu der (zur Blattebene senkrechten) Durchlaufrichtung der Kabine liegen. Entlang des Unterrandes des Flächenfilters 22 sowie der beiden Längsränder der Filtersektionen 241 erstreckt sich je eine Zweitabsaugrinne 531 eines Zweitabsaugkanalsystems 53. Mit dieser Variante der Absaugung kann einerseits solches Material, das nicht auf dem zu beschichtenden Werkstück aufgenommen wird und auch nicht zu den Filtern 22, 24 gelangt, direkt abgesaugt werden, und das Zweitkanalsystem nimmt gleichzeitig solches Material auf, das durch die Druckdüsen 71 von den Filtern abgereinigt wird. Mit anderen Worten kann dieses Zweitabsaugkanalsystem sowohl während des Hauptbetriebes der Kabine 1, also während der Beschichtung, als auch bei der Abreinigung mit Hilfe einer weiter unten noch zu beschreibenden Reinigungsvorrichtung zu entfernendes Material aufnehmen. Zu diesem Zweck ist das Zweitabsaugkanalsystem 53 mit einen Unterdruck erzeugenden Aggregat außerhalb der Kabine, beispielsweise einem Zyklon, verbunden. Der Gesamtstrom der Abluft ist also in zwei Luftströme aufgeteilt, wobei ein Luftstrom im Beschichtungsbetrieb durch die Filterelemente 22 und/oder 24 aus der Kabine geführt wird, während der andere Luftstrom über die Zweitabsaugrinnen 531 beim Beschichtungsbetrieb insbesondere in den unteren Eckbereichen vagabundierendes Pulver oder beim Reinigungsbetrieb das von den Filtern abgeschiedene, zu entfernendes Pulver zu einem außerhalb der Kabine angeordneten, hier nicht gezeigten Pulverbehälter transportiert, Dort ist eine zusätzliche Filterfläche zum Trennen von Pulver und in die Umgebung abzuführender Luft vorgesehen. Der Vorteil einer solchen Absaugstrom-Aufteilung ist, daß Flächenfilter, um eine hinreichende Reinigungsleistung zu erzielen, wie schon erwähnt sehr groß ausgebildet sein müssen, in der Regel aber die Kabinenwand im Hinblick auf die dann erforderliche Filtergröße nicht wesentlich vergrößert werden kann. Durch die Möglichkeit der Anordnung eines oder mehrerer externer Filter kann so in einfacher Weise die gegenüber Patronenfiltern - bezogen auf die Größe - geringere Abscheideleistung von Flächenfiltern ausgeglichen werden. Ein weiterer Vorteil ist darin zu sehen, daß man ggf. nur einen einzigen zentralen Pulverbehälter für alle Filtereinheiten benötigt, d.h. man kommt auch bei einer Reihenanordnung mehrerer Kabineneinheiten mit einem zentralen Pulverbehälter aus, und die heute üblichen und bekannten Transportvarianten wie Rüttelboden in der Kabine, Fluidboden, Transport mittels Injektoren etc. werden damit überflüssig.

Fig. 7 zeigt eine weitere Variationsmöglichkeit. Bei dieser Ausführungsform wird die rückseitige Düsenreinigung kombiniert mit einer durch den Kabinenraum 10 bewegbaren Reinigungsvorrichtung 4, die für eine Abreinigung der Kabinenwände einschließlich der Flächenfilter sorgen soll. Diese Reinigungsvorrichtung 4 ist hier nur angedeutet und umfaßt einen Träger 41, der in seiner Form im wesentlichen dem Querschnitt der Kabine, wie er aus Fig. 6 erkennbar ist, angepaßt ist und zu den Kabinenwandungen einen Arbeitsspalt 43 beläßt. In diesem befinden sich, umlaufend an dem Träger 41 in Form zweier Kränze befestigt, zur Bewegungsrichtung B schräg gestellt und sich hinsichtlich ihrer Wirkung in Bewegungsrichtung B deckend, elastische Reinigungselemente 42 mit Schabelippen 421, die an der Kabinenwand anhaftendes Pulvermaterial mechanisch abstreifen.

Abgestreiftes oder sonstwie abgereinigtes Pulvermaterial wird entweder durch die Kanäle 53, 531 oder, da eine solche Zweitabsaugung auch innerhalb der Reinigungsvorrichtung 4 angeordnet sein kann, in dieser abtransportiert, indem zwischen den Kränzen der Reinigungselemente 42 ein Saugkanal 451 angeordnet ist. Zwischen beiden Zweitabsaugmöglichkeiten ist zweckmäßigerweise eine Umschaltung vorgesehen. Für die Reinigung von Flächenfiltern ist die Anordnung, wie sie in Fig. 7 gezeigt ist, besonders günstig, insbesondere dann, wenn die Filteroberfläche beispielsweise nach Art der Fig. 5 profiliert und nicht eben ausgestaltet ist und sich Reinigungsvorrichtung 4 und Druckdüse 71 synchron miteinander bewegen, so daß, gerade bei Ausbildung der Reinigungsvorrichtung 4 als Saugwand 45 mit integrierter Zweitabsaugung, wie sie durch den Saugkanal 451 angedeutet ist, von der Druckdüse aus dem Filter herausgeblasenes Material unmittelbar von der Absaugung erfaßt und wegtransprotiert werden kann.

In Fig. 8 ist eine Kabinenanlage gezeigt, bei der die Flachfilter-Reinigungsvorrichtung 7 mit schrägwinklig zur Horizontalen angeordneten Zellenabschnitten 72 ausgebildet ist. Bei dieser Variante der Abschnittanordnung wird es in besonders einfacher Weise möglich, daß die Druckdüse 71 bequem bis in die obersten und untersten Bereiche gelangen und wirksam werden kann.

Wie man aus der Ausführungsform der Kabine ggf. mit Reinigungsvorrichtung 4, in Fig. 6 erkennt, ist diese bei Einsatz als Durchlaufkabine mit einem Durchlaß 40 für den ungehinderten Werkstücktransport z.B. mittels Kreisförderer 401 (nur angedeutet) ausgestattet.

Bei der in Fig. 9 dargestellten Ausführungsvariante ist gegenüber der der Fig. 6 statt einer Zweitkanalabsaugung ein Bodenfilter 24' vorgesehen, das von den Seiten-Flächenfiltern 22 her nach innen zu einer Pulversammelrinne 56 geneigt ist. In diesen Fall kann man in besonders vorteilhafter Weise die Druckdüsen 71 in den unteren Eckbereichen anordnen, und man kommt folglich mit zwei solcher Düsen aus. Die in Fig. 6 gezeigte mittlere Düse kann wegfallen, denn die beiden äußeren beaufschlagen die jeweiligen Teilbereiche 241' des Bodenfilters 24' mit und bewirken den Transport des auf diesen befindlichen Pulvers zur Pulversammelrinne 56 hin. Letztere wiederum kann mit einer Neigung in gewünschter Transportrichtung in Verbindung mit einer Fluidisierungseinrichtung oder mit einem mechanischen Austragungselement (Schabe-, Schrapp- oder Abstreifförderer, Rakel) versehen sein, um das Pulver aus der Kabine zu fördern. Vorzugsweise kann das Austragungselement gemeinsam mit den Druckdüsen 71 angetrieben werden, wobei die Bewegungsverbindung u.a. magnetisch erfolgen kann, so daß die Antriebselemente insgesamt außerhalb des Kabineninnenraums plaziert werden können und bei Reinigung der Kabine keiner Berücksichtigung bedürfen.

Im übrigen sei darauf hingewiesen, daß selbstverständlich die verschiedensten Kombinationen zwischen Filtereinrichtungen und sonstigen, bei derartigen Sprühbeschichtungskabinen üblichen Elementen, beispielweise auch hinsichtlich der Pulverrückgewinnung (Sammlung von abgeschiedenem Pulver), möglich sind und daß es primär darauf ankommt, eine wirkungsvolle Reinigungsvorrichtung für verwendete Flachfilter zu schaffen, um für die fortlaufende Reinigung und nicht nur Regeneration derselben während des Betriebes als auch bei der Gesamt-Reinigung der Kabine Sorge zu tragen.

Auch sei darauf hingewiesen, daß vorteilhaft wenigstens ein Teil der die zellenartigen Abschnitte 72 voneinander trennenden Wandungen 722 aus Filtermaterial ausgebildet sein kann, wodurch sich sowohl die Erzeugung von Abreinigungsschatten in filterseitigen Eckbereichen der Abnische Verbesserungen bei der Zellenausbildung/-herstellung erreichbar sind.

Weiterhin kann es vorteilhaft sein, die Abreinigungsvorrichtung 4 mit mindestens zwei zueinander beabstandeten Kränzen der Reinigungselemente 42 auszubilden, wobei der Abstand dieser Kränze mindestens der Breite der Zellen bzw. Beaufschlagungsabschnitte 72 entsprechen sollte. Damit wird bei der Endreinigung der Kabine zuverlässig verhindert, daß sich Pulver außerhalb der Abreinigungsvorrichtung auf benachbarten Filterflächenbereichen ablagern kann. Die Reinigungselemente 42 können, wenn sie, wie oben dargelegt, bevorzugt als Schabelippen ausgebildet sind, auch rechtwinklig zur Bewegungsrichtung B als durchgehend umlaufender Kranz angeordnet sein, also keine Schrägstellung aufweisen. Dadurch findet eine durchgängige mechanische Abdichtung jedes der zellenförmigen Abschnitte 72 im Augenblick der Endreinigung statt, so daß kein Material in der Kabine verbleibt.

## Patentansprüche

1. Kabine (1) zum Sprühbeschichten von Gegenständen mit pulverförmigem Beschichtungsmaterial, mit einer mindestens ein Flächenfilter (22, 24) umfassenden Filteranordnung (2) für die pulverbeladene, gefiltert aus der Kabine in die Umgebung zu leitende Luft und mit einer mindestens eine die Filterfläche beaufschlagende, funktionell gegen diese gerichtete Druckluftdüse (71) umfassenden Reinigungsvorrichtung (7) für das Flächenfilter (22, 24), wobei zwischen Reinigungsvorrichtung und Flächenfilter eine Relativbewegung stattfindet, **dadurch gekennzeichnet,** daß
a) das Flächenfilter (22) in eine Mehrzahl von gegeneinander abgedichteten zellenartigen Abschnitten (72) aufgeteilt ist,
b) die Druckluftdüse(n) (71) als jeweils mindestens einen Abschnitt (72) beaufschlagend dem Feld der Abschnitte zugeordnet ist (sind),
c) die Druckluftdüsen-Reinigungsvorrichtung (7) ausschließlich im Reingasbereich hinter dem Flächenfilter (22, 24) angeordnet ist, und
d) die Druckluftdüse (71) eine mit ihr unmittelbar bewegbare dichtende Abdeckeinrichtung (73) zum Abdichten des jeweils von der Düse beaufschlagten Abschnitts (72) sowie der diesem direkt benachbarten einen oder mehreren Abschnitte (72) umfaßt.

2. Kabine nach Anspruch 1 , **dadurch gekennzeichnet,** daß die Abschnitte (72) nach einem vorgegebenen Schema angeordnet sind.

3. Kabine nach Anspruch 1 oder 2 , **dadurch gekennzeichnet,** daß die Abschnitte (72) mit den Rändern ihrer Öffnungen (721) für die Düse (71) eine ebene Fläche aufspannen.

4. Kabine nach einem der Ansprüche 1 bis 3 , **dadurch gekennzeichnet,** daß die Abschnitte (72) als vertikale (Fig. 6) oder horizontale (Fig. 3) Reihen oder Zeilen angeordnet sind.

5. Kabine nach einem der Ansprüche 1 bis 4 , **dadurch gekennzeichnet,** daß sie ein Bodenfilter (24) aufweist, das mindestens teilweise gegenüber der Horizontalen geneigt ist.

6. Kabine nach Anspruch 5 , **dadurch gekennzeichnet,** daß das Bodenfilter (24) mit sich von einer Mittelachse (M) dachförmig nach außen geneigten Filtersektionen (241) ausgebildet ist.

7. Kabine nach einem der Ansprüche 1 bis 6 , **dadurch gekennzeichnet,** daß sie mit einer Zweitabsaugkanalanordnung (53) ausgerüstet ist.

8. Kabine nach Anspruch 7 , **dadurch gekennzeichnet,** daß sich je eine Zweitabsaugrinne (531) im Übergangsbereich zwischen Kabinenboden (14) und den beiden vertikalen Kabinenwänden (11) befindet.

9. Kabine nach Anspruch 8 , **dadurch gekennzeichnet,** daß in dem Bodenfilter (24') mindestens eine Pulversammelrinne (56) ausgebildet ist.

10. Kabine nach einem der Ansprüche 1 bis 9 , **dadurch gekennzeichnet,** daß das/die Flächenfilter (22) als U-förmig angeordnete Filter mit einer im wesentlichen ebenen Hauptfläche (221) und zwei sich von deren Rändern (222) winklig in den Kabinenraum (10) erstreckenden Nebenflächen (223) ausgebildet ist/sind.

11. Kabine nach einem der Ansprüche 1 bis 10 , **dadurch gekennzeichnet,** daß das Flächenfilter (22) mit einer wellen- oder alternierend U- oder V- förmig gestalteten Oberfläche (Fig. 5) ausgebildet ist.

12. Kabine nach einem der Ansprüche 1 bis 11 , **dadurch gekennzeichnet,** daß sie mit einer durch ihren Kabineninnenraum (10) bewegbaren Abreinigungsvorrichtung (4) mit Reinigungselementen (42) zum mechanischen Abstreifen von an den Kabinenwänden (11, 14) haftendem Pulver ausgerüstet ist.

13. Kabine nach Anspruch 12 , **dadurch gekennzeichnet,** daß die Abreinigungsvorrichtung (4) mit einer in ihr integrierten Zweitabsauganordnung (451) ausgerüstet ist.

14. Kabine nach Anspruch 1 oder 13 , **dadurch gekennzeichnet,** daß Abreinigungsvorrichtung (4) und Druckluftdüse (71) miteinander synchron über die abzureinigenden Filterflächen (22) bewegbar sind.

15. Kabine nach einem der Ansprüche 1 oder 12 bis 14 , **dadurch gekennzeichnet,** daß die Abreinigungsvorrichtung (4) mit mindestens zwei zueinander beabstandeten Kränzen der Reinigungselemente (42) ausgebildet ist, wobei der Abstand der Kränze mindestens der Breite eines der zellenartigen Abschnitte (72) entspricht.

16. Kabine nach einem der Ansprüche 1 bis 15 , **dadurch gekennzeichnet,** daß mindestens ein Teil von die zellenartigen Abschnitte (72) voneinander trennenden Wandungen (722) aus Filtermaterial ausgebildet ist.

## Claims

1. Booth for the spray-coating of articles with powdery coating material, with a filter arrangement (2) comprising at least one surface filter (23, 24) for the powder-laden air to be filtered and conveyed out of the booth into the environment and with a cleaning device (7) which comprises at least one compressed-air nozzle (71) for the surface filter (22, 24), applying pressure to and directed functionally towards the surface filter, a relative movement taking place between cleaning device and surface filter, **characterized in** that
a) the surface filter (22) is divided into a plurality of cell-like portions (72) which are sealed off from one another,
b) the compressed-air nozzle or nozzles (71) is (are) assigned to the field of the portions so as to apply pressure to at least one portion (72),
c) the compressed-air nozzle cleaning device (7) is arranged solely in the clean-gas region behind the surface filter (22, 24), and
d) the compressed-air nozzle (71) comprises a sealing covering device (73) directly movable with said compressed-air nozzle, for sealing off the portion (72) subjected to pressure by the nozzle and the one or more portions (72) directly adjacent to this portion.

2. Booth according to claim 1, characterised in that the portions (72) are arranged according to a predetermined pattern.

3. Booth according to claim 1 or 2, characterised in that the portions (72) form a plane surface with the edges of their openings (721) for the nozzle (71).

4. Booth according to one of claims 1 to 3, characterised in that the portions (72) are arranged in vertical (Fig. 6) or horizontal (Fig. 3) rows or lines.

5. Booth according to one of claims 1 to 4, characterised in that it comprises a floor filter (24) which is inclined at least partially relative to the horizontal.

6. Booth according to claim 5, characterised in that the floor filter (24) is designed with filter sections (241) inclined outwards in a roof-shaped manner from a median axis (M).

7. Booth according to one of claims 1 to 6, characterised in that it is equipped with a secondary suction-channel arrangement (53).

8. Booth according to claim 7, characterised in that a secondary suction channel (531) is located in the transitional region between the booth floor (14) and each of the two vertical booth walls (11).

9. Booth according to claim 8, characterised in that at least one powder-collecting channel (56) is formed in the floor filter (24').

10. Booth according to one of claims 1 to 9, characterised in that the surface filter or filters (22) is (are) formed as filters arranged in a U-shaped manner, with an essentially plane main surface (221) and two auxiliary surfaces (223) extending at an angle from its edges (222) into the booth space (10).

11. Booth according to one of claims 1 to 10, characterised in that the surface filter (22) is formed with a corrugated or alternately U-shaped or V-shaped surface (Fig. 5).

12. Booth according to one of claims 1 to 11, characterised in that it is equipped with a cleaning apparatus (4) movable through its booth interior (10) having cleaning elements (42) for mechanically stripping powder adhering to the booth walls (11, 14).

13. Booth according to claim 12, characterised in that the cleaning apparatus (4) is equipped with a secondary suction arrangement (451) which is integrated in said cleaning apparatus.

14. Booth according to claim 1 or 13, characterised in that the cleaning apparatus (4) and the compressed-air nozzle (71) are movable synchronously with one another over the filter surfaces (22) to be cleaned.

15. Booth according to one of claims 1 or 12 to 14, characterised in that the cleaning apparatus (4) is formed with at least two mutually spaced crowns of the cleaning elements (42), the spacing of the crowns corresponding at least to the width of one of the cell-like portions (72).

16. Booth according to one of claims 1 to 15, characterised in that at least part of the walls dividing the cell-like portions (72) from one another is formed of filter material.

## Revendications

1. Cabine (1) pour revêtir des objets par pulvérisation d'un matériau de revêtement pulvérulent, comportant un arrangement de filtres (2), qui possède au moins un filtre plat (23, 24), arrangement destiné à l'air chargé de poudre, et qui, filtré, doit être envoyé de la cabine vers l'atmosphère extérieure, et comportant pour le filtre plat (22, 24) au moins un dispositif de nettoyage (7), qui possède une buse à air comprimé (71), laquelle agit sur la surface filtrante et est fonctionnellement dirigée contre cette dernière, un mouvement relatif ayant lieu entre le dispositif de nettoyage et le filtre plat, caractérisée en ce que :
a) le filtre plat (22) est subdivisé en un certain nombre de segments (72) en forme de cellules, étanchés les uns par rapport aux autres,
b) la ou les buses à air comprimé (71) sont, en tant que buses agissant chacune sur au moins un segment (72), affectées à la zone des segments,
c) le dispositif de nettoyage (7) des buses à air comprimé est, sauf dans la zone du gaz purifié, disposé en arrière du filtre plat (22, 24), et
d) la buse à air comprimé (71) comporte un dispositif de recouvrement (73), à effet d'étanchéité, se déplaçant directement avec elle, et destiné à assurer l'étanchéité de chacun des segments (72) recevant le jet provenant de la buse, ainsi que d'un ou plusieurs segments (72) immédiatement voisins de ce dernier.

2. Cabine selon la revendication 1, caractérisée en ce que les segments (72) sont disposés selon un schéma prédéfini.

3. Cabine selon la revendication 1 ou 2, caractérisée en ce que les segments (72) forment, avec les bords de leurs ouvertures (721), une surface plane pour la buse (71).

4. Cabine selon l'une des revendications 1 à 3, caractérisée en ce que les segments (72) sont disposés sous forme de rangées ou de lignes verticales (Figure 6) ou horizontales (Figure 3).

5. Cabine selon l'une des revendications 1 à 4, caractérisée en ce qu'elle comporte un filtre de fond (24), qui au moins partiellement est inclinée par rapport à l'horizontale.

6. Cabine selon la revendication 5, caractérisée en ce que le filtre de fond (24) est constitué de sections de filtration (241), inclinées vers l'extérieur en forme de toit à partir d'un axe central (M).

7. Cabine selon l'une des revendications 1 à 6, caractérisée en ce qu'elle est pourvue d'un dispositif à double gaine d'aspiration (53).

8. Cabine selon la revendication 7, caractérisée en ce qu'une gouttière d'aspiration double est située dans la zone de transition entre le fond de cabine (14) et chacune des deux parois verticales (11) de la cabine.

9. Cabine selon la revendication 8, caractérisée en ce qu'au moins une rigole collectrice de poudre (56) est réalisée dans le filtre de fond (24').

10. Cabine selon l'une des revendications 1 à 9, caractérisée en ce que le ou les filtres plats (22) sont conçus sous forme de filtres disposés en U, avec une surface principale (221) essentiellement plane et deux surfaces secondaires (223), s'étendant selon un certain angle, à partir de ses bords (222), jusqu'à l'intérieur de la cabine (10).

11. Cabine selon l'une des revendications 1 à 10, caractérisée en ce que le filtre plat (22) est conçu avec une surface ondulée, ou en alternance en U ou en V (Figure 5).

12. Cabine selon l'une des revendications 1 à 11, caractérisée en ce que le dispositif de nettoyage (4), qui se déplace en traversant le volume intérieur de la cabine (10), est pourvue d'éléments de nettoyage (42), pour assurer un raclage mécanique de la poudre qui adhère aux parois (11, 14) de la cabine.

13. Cabine selon la revendication 12, caractérisée en ce que le dispositif de nettoyage (4) est muni d'un dispositif d'aspiration double (451), qui y est intégré.

14. Cabine selon la revendication 1 ou 13, caractérisée en ce que le dispositif de nettoyage (4) et la buse à air comprimé (71) se déplacent d'une manière synchrone l'un par rapport à l'autre, au-dessus des surfaces filtrantes à nettoyer (22).

15. Cabine selon l'une des revendications 1 ou 12 à 14, caractérisée en ce que le dispositif de nettoyage (4) est conçu avec au moins deux couronnes, écartées l'une de l'autre, des éléments de nettoyage (42), la distance entre les couronnes correspondant au moins à la largeur de l'un des segments (72) en forme de cellule.

16. Cabine selon l'une des revendications 1 à 15, caractérisée en ce qu'au moins une partie des parois (722) qui séparent les uns des autres les segments (72) en forme de cellule, sont en un matériau filtrant.
